# DEMANDE DE BREVET EUROPEEN

(11) **EP 1 202 035 A1**
(43) Date de publication de la demande: **02.05.2002**
(21) Numéro de dépôt: 01402670.2
(22) Date de dépôt: 16.10.2001
(51) Int. Cl.: G01L 3/10

(54) **Dispositif de mesure d'un couple de torsion et module le comprenant**

(30) Priorité: 31.10.2000 FR 0014014
(71) Demandeur: SNR ROULEMENTS, F-74010 Annecy (FR)
(72) Inventeur: Desbiolles, Pascal, 74570 Thorens-Guieres (FR)
(74) Mandataire: Geismar, Thierry

(57) **Abrégé**

Dispositif de mesure du couple de torsion appliqué à un arbre tournant (1), ledit dispositif comprenant un corps d'épreuve (2) et un premier (5) et un deuxième (6) roulement, dans lequel :
- la bague tournante (8) du premier roulement (5) est associée au corps d'épreuve (2) au voisinage d'une première extrémité (3) de celui-ci ;
- la bague tournante (8) du deuxième roulement (6) est associée au corps d'épreuve (2) au voisinage d'une deuxième extrémité (4) de celui-ci ;
- les premier (5) et deuxième (6) roulements sont équipés chacun d'un dispositif numérique de détermination (10) de la position angulaire de la bague tournante (8) par rapport à la bague fixe (7) ;
un dispositif de comparaison (15) des signaux issus respectivement de chacun des dispositifs de détermination (10) étant prévu pour délivrer la valeur du couple appliqué à l'arbre tournant (1).

## Description

L'invention concerne un dispositif de mesure du couple de torsion appliqué à un arbre tournant ainsi qu'un module comprenant un tel dispositif.

Elle vise par exemple la mesure du couple de torsion appliqué sur une colonne de direction d'un véhicule par l'intermédiaire du volant de direction.

Par colonne de direction, l'on désigne conventionnellement, un élément tubulaire, fixé à la carrosserie du véhicule, sous le tableau de bord, qui guide et supporte l'arbre de transmission relié au volant de direction.

Ce volant de direction est alors un organe de commande manuelle, relié aux roues directrices et utilisé par le conducteur pour diriger le véhicule.

L'invention concerne également les colonnes de direction découplées. Contrairement aux colonnes de direction conventionnelles, les colonnes de direction découplées ne sont pas associées à un boîtier de direction transformant le mouvement circulaire du volant de direction en déplacement angulaire de la bielle pendante qui provoque le braquage de roues.

Tout au contraire, il n'y a pas, pour ces directions découplées, de liaison mécanique directe entre le volant et les roues reposant sur le sol, que le véhicule soit réel ou appartienne à un système de simulation.

Cette simulation peut être d'objet ludique, liée à un apprentissage dans les auto-écoles ou bien encore liée à une simulation de conduite interactive pour les besoins de constructeurs automobiles.

Dans de tels simulateurs, la restitution d'efforts au niveau du volant grâce à un mécanisme générant un couple résistant sur le volant en fonction du type de véhicule à simuler, équipé ou non d'une direction assistée, doit tenir compte des conditions de roulage à recréer.

La mesure du couple appliquée au volant est par conséquent essentielle pour assurer une bonne simulation, en temps réel.

La mesure de couple sur l'arbre du volant de direction est également très importante dans les servodirections ou directions assistées.

En effet, le déclenchement de l'assistance dépend notamment du couple appliqué par le conducteur sur le volant.

Le dispositif de mesure de couple de torsion utilisé dans les servodirections émet un signal indicatif du couple de braquage exercé par le conducteur sur le volant et donc sur l'arbre de transmission de la colonne de direction du véhicule.

Ce signal est conventionnellement adressé à un calculateur d'assistance de direction qui déclenche l'assistance, en commandant par exemple un moteur électrique, dans le cas d'une servodirection électrique.

L'invention peut également s'appliquer à d'autres domaines comme celui de la transmission d'efforts, par exemple aux roues d'un véhicule, ou au contrôle du freinage dudit véhicule au moyen de la mesure du couple appliqué.

On connaît déjà des dispositifs de mesure du couple de torsion appliqué à un arbre tournant qui comprennent une barre de torsion dans lesquels le signal de sortie est de type analogique proportionnel au champ magnétique lu.

Par exemple, la détection du décalage angulaire de deux générateurs de champ magnétique par rapport à des organes détecteurs permet de délivrer un signal analogique proportionnel au couple appliqué.

Ce type de technologie magnétique analogique présente un certain nombre d'inconvénients, en particulier lié au contrôle permanent de l'entrefer, la compensation en température du champ magnétique.

Dans le cadre des dispositifs de mesure de couple de l'art antérieur, le contrôle de l'entrefer et des dérives en température complique le montage du fait du nombre de pièces mécaniques à assembler et du placement précis des transitions magnétiques par rapport aux organes détecteurs, ce qui nécessite une phase de calibrage et de réglage lors de l'assemblage du dispositif.

De plus, les dispositifs de mesure du couple de torsion de l'art antérieur n'intègrent pas les roulements nécessaires à la rotation de l'arbre tournant, ce qui les rendent plus complexes à monter.

L'invention vise donc à remédier à ces inconvénients en proposant un dispositif de mesure du couple de torsion appliqué à un arbre tournant qui comprend des capteurs magnétiques numériques.

En effet, les capteurs numériques fonctionnent avec des comparateurs à seuils et sont de ce fait moins sensibles que les capteurs analogiques aux variations d'amplitude du champ magnétique.

De plus, afin d'augmenter la résolution des signaux numériques de sortie, ces capteurs magnétiques peuvent comporter un interpolateur numérique spatial de type ratiométrique permettant de s'affranchir de ces même variations d'entrefer et dérives d'amplitude en température.

L'invention vise en outre à proposer un dispositif de mesure de couple dans lequel les capteurs magnétiques restent fixes lors de la rotation de l'arbre tournant.

De plus, suivant l'invention, la fonction mesure du couple est intégrée à deux roulements de l'arbre tournant en utilisant la technologie du type à codeur multipolaire de sorte à ajouter la fonction de guidage en rotation dudit arbre à celle de mesure du couple.

A cet effet, et selon un premier aspect, l'invention propose un dispositif de mesure du couple de torsion appliqué à un arbre tournant, notamment à une colonne de direction d'un véhicule, ledit dispositif comprenant un corps d'épreuve déformable en torsion sous l'action du couple appliqué sur ledit arbre ainsi qu'un premier et un deuxième roulement du type comprenant chacun une bague fixe, une bague tournante et des corps roulants disposés entre elles, dans lequel :
- la bague tournante du premier roulement est associée au corps d'épreuve au voisinage d'une première extrémité de celui-ci ;
- la bague tournante du deuxième roulement est associée au corps d'épreuve au voisinage d'une deuxième extrémité de celui-ci ;
- les premier et deuxième roulements sont équipés chacun d'un dispositif numérique de détermination de la position angulaire de la bague tournante par rapport à la bague fixe, lesdits dispositifs de détermination comprenant :

- un moyen annulaire générateur d'impulsions magnétiques associé à la bague tournante ;
- un capteur magnétique fixe qui est agencé pour détecter lesdites impulsions magnétiques et pour délivrer des signaux numériques ;
- des moyens électroniques aptes, à partir des signaux numériques issus dudit capteur magnétique, à déterminer la position angulaire du moyen annulaire ;
un dispositif de comparaison des signaux numériques issus respectivement des moyens électroniques de chacun des dispositifs de détermination étant prévu pour délivrer la valeur du couple appliqué à l'arbre tournant.

Selon un deuxième aspect, l'invention propose un module de mesure du couple de torsion appliqué à un arbre tournant, ledit module comprenant un dispositif tel que décrit ci-dessus et des moyens d'association dudit module avec respectivement deux parties de l'arbre, ledit arbre étant dépourvu de corps d'épreuve.

Selon un troisième aspect, l'invention propose un module de mesure du couple de torsion appliqué à un arbre tournant, ledit module comprenant un dispositif tel que décrit ci-dessus et des moyens d'association dudit module avec respectivement une extrémité de l'arbre et l'organe appliquant le couple, ledit arbre étant dépourvu de corps d'épreuve.

D'autres objets et avantages de l'invention apparaîtront au cours de la description qui suit, faite en référence aux dessins annexés, dans lesquels :
- la figure 1 est un schéma fonctionnel d'un dispositif de mesure du couple de torsion appliqué à un arbre tournant montrant les deux anneaux multipolaires qui sont associés respectivement à une bague tournante d'un roulement, les deux capteurs magnétiques fixes qui délivrent chacun deux signaux qui sont traités par respectivement un moyen électronique de sorte à déterminer la position angulaire de chacun des deux anneaux multipolaires, et le dispositif de comparaison délivrant la valeur du couple appliqué à l'arbre tournant ;
- la figure 2 est une vue partielle et en coupe longitudinale d'une colonne de direction intégrant un dispositif de mesure du couple de torsion qui lui est appliqué ;
- la figure 3 est une vue en perspective partiellement éclatée et partiellement arrachée d'un module de mesure du couple de torsion appliqué à un arbre tournant.

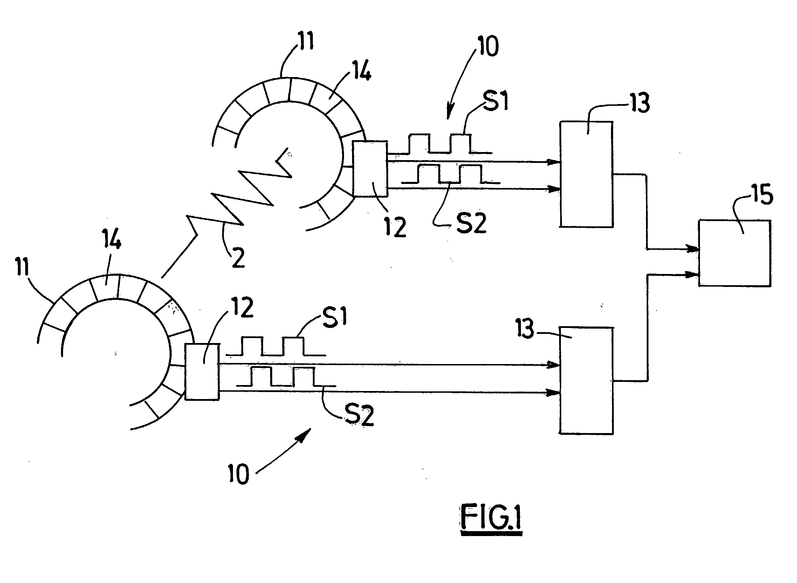

Sur les figures 1 à 3 est représenté un dispositif de mesure du couple de torsion appliqué à un arbre tournant 1 du type comprenant un corps d'épreuve 2 déformable en torsion sous l'action du couple appliqué sur ledit arbre 1.

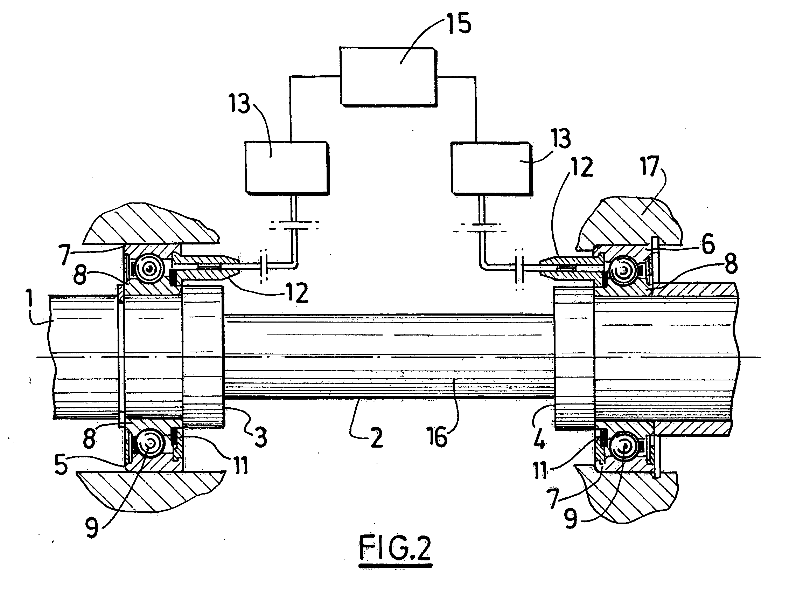

Dans un exemple particulier (voir figure 2), l'arbre tournant 1 est une colonne de direction d'un véhicule sur laquelle un couple de braquage est exercé par le conducteur à l'aide du volant de direction.

Lorsque l'on veut connaître ce couple de braquage, il est connu de prévoir un corps d'épreuve 2 apte à transmettre le couple appliqué en se déformant élastiquement sous l'action dudit couple.

La mesure du couple exercé peut alors être adressée, notamment sous la forme d'un signal électrique, à un calculateur d'assistance de direction qui déclenche l'assistance, par exemple par l'intermédiaire d'un moteur électrique dans le cas d'une servodirection électrique.

Le corps d'épreuve 2 se présente typiquement sous la forme d'une barre de torsion de diamètre amoindri par rapport à celui de l'arbre 1 car, en élasticité linéaire isotrope, le couple exercé en torsion pure sur une barre cylindrique pleine de section circulaire varie pour un matériau donné, en fonction de la puissance quatrième du diamètre de la barre, à angle de torsion fixé.

Par conséquent, le fait de réaliser une zone de section réduite permet, sous l'effet du couple appliqué, de concentrer et d'amplifier les déformations en torsion sur ladite zone de sorte à en faire une zone de mesure privilégiée pour la valeur du couple.

Dans les modes de réalisation représentés sur les figures, la barre de torsion 2, disposée coaxialement à l'arbre 1, est de section cylindrique. Toutefois, en fonction des contraintes d'utilisation, la disposition de la barre de torsion 2 et/ou la géométrie de sa section peuvent être prévues différemment.

Le corps d'épreuve 2 présente une première 3 et une deuxième 4 extrémité qui, sous l'effet du couple appliqué sur l'arbre 1, se déplacent en rotation conjointement à l'arbre 1 mais avec un décalage angulaire de l'une par rapport à l'autre.

On souhaite mesurer ce décalage angulaire afin de calculer, par des moyens électroniques prenant en compte la nature du corps d'épreuve, le couple appliqué sur l'arbre 1.

A cet effet, un premier 5 et un deuxième 6 roulement sont prévus aux voisinages respectifs de la première 3 et de la deuxième 4 extrémité du corps d'épreuve 2, et en regard l'un de l'autre.

Ces roulements 5, 6 sont ceux classiquement utilisés pour permettre la rotation d'un arbre tournant 1, à savoir ils sont du type comprenant chacun une bague extérieure fixe 7, une bague intérieure tournante 8 et des corps roulants 9 disposés entre elles.

Suivant l'invention, les roulements 5, 6 sont équipés chacun d'un dispositif de détermination 10 de la position angulaire de la bague tournante 8 par rapport à la bague fixe 7.

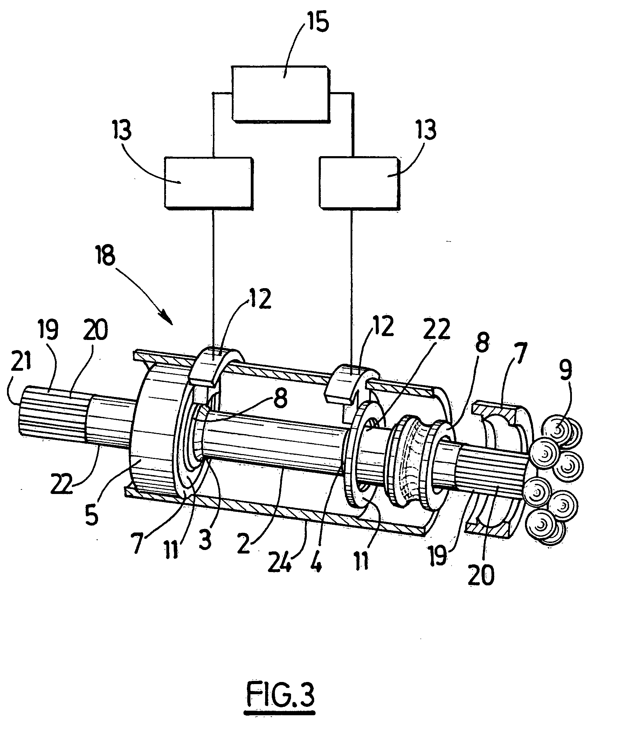

Dans les réalisations représentées sur les figures 2 et 3, les roulements 5, 6 sont identiques et sont disposés en regard l'un de l'autre, toutefois on peut prévoir des roulements 5, 6 différents pourvu qu'ils soient agencés pour permettre la mesure de la position angulaire de la bague tournante 8 et donc celle de l'extrémité 3, 4 du corps d'épreuve 2 à laquelle elle est associée.

En relation avec la figure 1, on décrit des dispositifs numériques de détermination 10 comprenant chacun :
- un moyen annulaire générateur 11 d'impulsions magnétiques associé à la bague tournante 8 pour tourner conjointement avec elle ;
- un capteur magnétique fixe 12 par rapport à l'arbre tournant 1 et qui est agencé pour détecter lesdites impulsions magnétiques et pour délivrer des signaux numériques S1, S2 ;
- des moyens électroniques 13 aptes, à partir des signaux numériques issus dudit capteur magnétique 12, à déterminer la position angulaire du moyen annulaire 11.

De tels dispositifs 10 sont par exemple décrits dans les documents FR-A-2 769 087 et FR-A-2 769 088 issus de la demanderesse dont les descriptions ne seront pas reprises ici.

Les capteurs 12 comprennent par exemple au moins deux éléments sensibles ou une barrette d'éléments sensibles choisis parmi les sondes à effet Hall, les magnétorésistances, les magnétorésistances géantes, lesdits éléments sensibles étant placés à distance d'entrefer du moyen annulaire 11 générateur d'impulsions magnétiques.

Dans un exemple particulier, le moyen générateur 11 d'impulsions est formé d'un anneau multipolaire en matériau synthétique chargé de particules de ferrite formé d'une pluralité de domaines contigus 14 à direction d'aimantation inversée d'un domaine donné par rapport aux deux domaines qui lui sont contigus.

Suivant cette réalisation, les capteurs 12 délivrent au moins deux signaux électriques qui sont de forme sinusoïdale, de même amplitude, centrés sur la même valeur moyenne et en quadrature l'un par rapport à l'autre. De plus, ils ont une période égale à un tour de rotation de l'anneau, soit 2π mécaniques.

A partir de ces signaux, et comme décrit respectivement dans les documents FR-A-2 769 087 et FR-A-2 769 088, il est possible d'obtenir des signaux numériques S1 et S2 qui permettent, par l'intermédiaire de moyens électroniques 13, de connaître la position relative ou absolue de l'anneau 11 et donc de la bague tournante 8 associée par rapport à la bague fixe 7.

On entend par position angulaire relative d'un organe tournant l'angle séparant la position de l'organe tournant à un moment donné, d'une position initiale quelconque de celui-ci par rapport à la structure fixe, cette position initiale pouvant varier, d'une mesure à l'autre, par rapport à la structure fixe.

On entend par position angulaire absolue l'angle séparant la position de l'organe tournant à un moment donné, d'une position de référence de l'organe tournant, cette position de référence étant fixe par rapport à la structure fixe.

En variante, les dispositifs de détermination 10 peuvent comprendre chacun un interpolateur augmentant la résolution des signaux de sortie respectifs, tel que celui décrit dans le document FR-A-2 769 087.

Suivant une réalisation, l'un des dispositifs de détermination 10 peut être utilisé pour déterminer en outre la position angulaire de l'arbre tournant 1.

La valeur de cette position, notamment dans le cas où elle est absolue, peut alors être utilisée, seule ou en combinaison avec la mesure du couple appliqué, dans un système de sécurité d'un véhicule, tel qu'un système anti-patinage, anti-blocage, anti-roulis ou encore un système d'aide à la navigation.

Par ailleurs, un dispositif de comparaison 15 des signaux issus respectivement des moyens électroniques 13 de chacun des dispositifs de détermination 10 est prévu pour délivrer la valeur du couple appliqué à l'arbre tournant 1.

Le dispositif de mesure du couple de torsion permet ainsi, en utilisant les signaux analogiques représentant la variation du champ magnétique, de générer des signaux numériques S1, S2 qui sont ensuite traités sous forme numérique par les moyens électroniques 13 puis par le dispositif de comparaison 15 pour obtenir la valeur du couple appliqué.

En fonction du type de capteur 12 utilisé, le dispositif 15 est agencé pour comparer soit deux angles relatifs soit deux angles absolus.

Dans un exemple de réalisation, les dispositifs de détermination 10 comprennent chacun un registre qui est initialisé à zéro sous couple nul et le dispositif de comparaison 15 comprend un soustracteur de la valeur de chacun des registres de sorte à délivrer, en fonction de la nature du corps d'épreuve, la valeur du couple appliqué à l'arbre tournant 1.

Les moyens électroniques et le dispositif de comparaison peuvent être intégrés dans un calculateur de commande d'au moins une fonction d'un véhicule, par exemple de direction assistée électrique ou de contrôle de trajectoire.

Dans le mode de réalisation représenté sur la figure 2, le corps d'épreuve 2 est intégré à une colonne de direction 1 sous la forme d'une zone 16 de diamètre amoindri venue de matière avec la colonne 1 et les bagues tournantes 8 des roulements 5, 6 sont emmanchées chacune sur une partie de la colonne 1 au voisinage respectif de la première 3 et de la deuxième 4 extrémité du corps d'épreuve 2.

La colonne de direction 1 est associée d'une part à un volant de direction et d'autre part à un boîtier de direction, par exemple une crémaillère, transformant le mouvement circulaire du volant de direction en déplacement angulaire de la bielle pendante qui provoque le braquage des roues.

Les bagues fixes 7 des roulements 5, 6 sont associées à une structure fixe, par exemple à un tube creux 17 dans lequel la colonne 1 est disposée pour tourner.

Dans le mode de réalisation représenté sur la figure 2, seule la bague fixe 7 du roulement 6 est associée au tube 17, la bague fixe 7 du roulement 5 étant montée coulissante dans ledit tube 17.

Dans cette réalisation, l'ensemble formé des bagues tournantes 8 et de la colonne 1 est donc monté tournant à l'intérieur du tube fixe 17.

Par ailleurs, le capteur 12 est associé à la bague fixe 7 de chacun des roulements 5, 6 en regard et à distance d'entrefer de l'anneau multipolaire 11 de sorte que les capteurs 12 sont intégrés respectivement audit roulements 5, 6.

Lorsqu'un couple est appliqué sur la colonne de direction 1 par l'intermédiaire du volant, celle-ci le transmet au boîtier de direction en tournant d'un certain angle.

Le corps d'épreuve 2, notamment par sa géométrie et/ou par la nature du matériau qui le compose, est agencé pour transmettre le mouvement de rotation en subissant une torsion élastique sous l'action de ce couple.

De cette torsion, il résulte que les extrémités 3, 4 du corps d'épreuve 2, et donc les bagues tournantes 8 qui leur sont associées, se déplacent en rotation conjointement avec la colonne 1 mais avec un décalage angulaire de l'une par rapport à l'autre, ledit décalage croissant de façon proportionnelle avec l'intensité du couple.

La géométrie et/ou la nature du matériau composant le corps d'épreuve 2 sont prévues pour que, sur toute la zone d'utilisation normale de la colonne de direction 1, d'une part la torsion ne dépasse pas la limite élastique du matériau et d'autre part le décalage angulaire soit détectable par les dispositifs de détermination 10 utilisés.

Les capteurs 12, en mesurant la position angulaire de chacune des bagues tournantes 8, permettent d'obtenir la valeur du couple par comparaison de ces deux positions, notamment par différence de ces deux valeurs dans la zone de torsion élastique du corps d'épreuve 2.

En outre, la mesure de l'un ou des deux capteurs 12 peut être utilisée pour connaître la position relative ou absolue de la colonne 1 par rapport au châssis du véhicule.

En effet, on peut définir que la position angulaire de l'une des bagues tournantes 8 correspond à celle de la colonne 1, à savoir typiquement comprise entre -4π et +4π dans le cas ou le volant de direction est prévu pour effectuer quatre tours complets.

La figure 3 représente un module de mesure 18 du couple de torsion appliqué à un arbre tournant 1, ledit module 18 comprenant un dispositif de mesure de couple tel que décrit ci-dessus.

Sur cette figure, l'un des roulements 6 est représenté de façon éclatée de sorte à mieux montrer la bague fixe 7, l'anneau multipolaire 11, la bague tournante 8 et les corps roulants 9.

Le module 18 est destiné à être inséré, éventuellement de façon amovible, entre deux parties d'un ensemble sur lequel est appliqué le couple à mesurer.

A cet effet, le module 18 comprend, en outre du dispositif de mesure de couple, des moyens d'association 19 dudit module 18 avec cet ensemble.

Selon une première variante, le module 18 est intégré entre deux parties de la colonne de direction 1, ladite colonne étant dépourvue de corps d'épreuve.

Selon une deuxième variante, le module 18 est intégré entre la colonne de direction 1 et le volant de direction, ladite colonne étant dépourvue de corps d'épreuve.

Les moyens d'association 19 représentés sur la figure 3, au nombre de deux, sont formés chacun d'une partie cannelée 20 qui s'étendent chacune de part et d'autre du module 18. Par exemple (voir figure 3), les parties cannelées 20 sont prévues sur une extrémité 21 d'une pièce cylindrique 22 de diamètre sensiblement identique à celui de la colonne 1 et dont l'autre extrémité 23 est venue de matière avec le corps d'épreuve 2. Suivant cette réalisation, l'ensemble formé du corps d'épreuve 2 et des moyens d'association 19 est monobloc.

La partie de colonne et/ou l'organe appliquant le couple peuvent être rendus solidaires respectivement de ces deux parties cannelées 20, notamment par emmanchement à force, de sorte que l'ensemble ainsi formé soit apte d'une part à transmettre le couple et d'autre part à le mesurer.

Dans le module représenté sur la figure 3, la bague tournante 8 de chaque roulement 5, 6 est associée au corps d'épreuve 2 au voisinage de ses extrémités 3, 4 respectives.

Le module 18 comprend en outre une pièce tubulaire creuse 24 (représentée partiellement sur la figure 3) sur laquelle les bagues fixes 7 des roulements 5, 6 sont associées, les capteurs 12 étant également associés à cette pièce 24, de sorte à être dissociés des roulements 5, 6.

Un tel module 18 présente l'avantage d'être compact et de former un ensemble indépendant qui peut être associé, éventuellement de façon amovible, à un ensemble sur lequel un couple devant être transmis et mesuré est appliqué.

## Revendications

1. Dispositif de mesure du couple de torsion appliqué à un arbre tournant (1), notamment à une colonne de direction d'un véhicule, ledit dispositif comprenant un corps d'épreuve (2) déformable en torsion sous l'action du couple appliqué sur ledit arbre (1) ainsi qu'un premier (5) et un deuxième (6) roulement du type comprenant chacun une bague fixe (7), une bague tournante (8) et des corps roulants (9) disposés entre elles, ledit dispositif étant **caractérisé en ce que** :
- la bague tournante (8) du premier roulement (5) est associée au corps d'épreuve (2) au voisinage d'une première extrémité (3) de celui-ci ;
- la bague tournante (8) du deuxième roulement (6) est associée au corps d'épreuve (2) au voisinage d'une deuxième extrémité (4) de celui-ci ;
- les premier (5) et deuxième (6) roulements sont équipés chacun d'un dispositif numérique de détermination (10) de la position angulaire de la bague tournante (8) par rapport à la bague fixe (7), lesdits dispositifs (10) de détermination comprenant :
- un moyen annulaire (11) générateur d'impulsions magnétiques associé à la bague tournante (8) pour tourner conjointement avec elle ;
- un capteur magnétique fixe (12) qui est agencé pour détecter lesdites impulsions magnétiques et pour délivrer des signaux numériques (S1, S2);
- des moyens électroniques (13) aptes, à partir des signaux numériques issus dudit capteur magnétique (12), à déterminer la position angulaire du moyen annulaire (11);
un dispositif de comparaison (15) des signaux numériques issus respectivement des moyens électroniques (13) de chacun des dispositifs de détermination (10) étant prévu pour délivrer la valeur du couple appliqué à l'arbre tournant (1).

2. Dispositif selon la revendication 1, **caractérisé en ce que** les capteurs (12) comprennent au moins deux éléments sensibles choisis parmi les sondes à effet Hall, les magnétorésistances, les magnétorésistances géantes.

3. Dispositif selon la revendication 1 ou 2, **caractérisé en ce que** le moyen générateur d'impulsions (11) est un anneau multipolaire en matériau synthétique chargé de particules de ferrite formé d'une pluralité de domaines contigus (14) à direction d'aimantation inversée d'un domaine donné par rapport aux deux domaines qui lui sont contigus.

4. Dispositif selon l'une quelconque des revendications 1 à 3, **caractérisé en ce que** le dispositif (15) compare deux angles relatifs.

5. Dispositif selon l'une quelconque des revendications 1 à 3, **caractérisé en ce que** le dispositif (15) compare deux angles absolus.

6. Dispositif selon l'une quelconque des revendications 1 à 5, **caractérisé en ce qu'**au moins l'un des dispositifs de détermination (10) est utilisé pour déterminer en outre la position angulaire de l'arbre tournant (1).

7. Dispositif selon la revendication 6, **caractérisé en ce qu'**au moins l'un des dispositifs de détermination (10) délivre la position absolue de la bague tournante (8) par rapport à la bague fixe (7).

8. Dispositif selon l'une quelconque des revendications 1 à 7, **caractérisé en ce que** les dispositifs de détermination (10) comprennent chacun un interpolateur augmentant la résolution des signaux de sortie respectifs.

9. Dispositif selon l'une quelconque des revendications 1 à 8, **caractérisé en ce que** les dispositifs de détermination (10) comprennent chacun un registre qui est initialisé à zéro sous couple nul.

10. Dispositif selon la revendication 9, **caractérisé en ce que** le dispositif de comparaison (15) comprend un soustracteur de la valeur des registres de sorte à délivrer la valeur du couple appliqué à l'arbre tournant (1).

11. Dispositif selon l'une quelconque des revendications 1 à 10, **caractérisé en ce que** les moyens électroniques (13) et le dispositif de comparaison (15) sont intégrés dans un calculateur de commande d'au moins une fonction d'un véhicule.

12. Dispositif selon l'une quelconque des revendications 1 à 11, **caractérisé en ce que** le corps d'épreuve (2) est intégré à l'arbre (1), par exemple sous la forme d'une zone de diamètre amoindri (16) venue de matière avec l'arbre (1).

13. Dispositif selon l'une quelconque des revendications 1 à 12, **caractérisé en ce que** le capteur (12) est intégré au roulement (5, 6).

14. Module de mesure (18) du couple de torsion appliqué à un arbre tournant (1), ledit module (18) comprenant un dispositif selon l'une quelconque des revendications 1 à 11 et des moyens d'association (19) dudit module (18) avec respectivement deux parties de l'arbre (1), ledit arbre (1) étant dépourvu de corps d'épreuve (2).

15. Module de mesure (18) du couple de torsion appliqué à un arbre tournant (1), ledit module (18) comprenant un dispositif selon l'une quelconque des revendications 1 à 11 et des moyens d'association (19) dudit module (18) avec respectivement une extrémité de l'arbre (1) et l'organe appliquant le couple, ledit arbre (1) étant dépourvu de corps d'épreuve (2).

16. Module de mesure (18) selon la revendication 14 ou 15, **caractérisé en ce que** le capteur (12) est dissocié du roulement (5, 6).
